# EUROPÄISCHE PATENTSCHRIFT

(11) **EP 2 383 133 B1**
(45) Veröffentlichungstag und Bekanntmachung des Hinweises auf die Patenterteilung: **12.09.2018**
(21) Anmeldenummer: 11003417.0
(22) Anmeldetag: 26.04.2011
(51) Int. Cl.: B60J 7/08, B60J 7/10, B60J 7/06, B60J 7/00

(54) **Vorrichtung zum bereichsweisen Anheben einer Dachplane**
Device for lifting a section of a roof tarpaulin
Dispositif d'élévation partielle d'une bâche pour toits

(30) Priorität: 29.04.2010 DE 102010018807
(43) Veröffentlichungstag der Anmeldung: 02.11.2011
(73) Patentinhaber: Fahrzeugwerk Bernard Krone GmbH, 48480 Spelle (DE)
(72) Erfinder: Finner, Wolfgang, 49757 Werlte (DE); Müller, Berthold, 49757 Werlte (DE)
(74) Vertreter: Busse & Busse

(56) Entgegenhaltungen:
- FR-A1- 2 653 478
- GB-A- 339 440

## Beschreibung

Die Erfindung bezieht sich auf eine Vorrichtung zum bereichsweisen Anheben einer Dachplane für beispielsweise Nutzfahrzeuge, Fahrzeugaufbauten und/oder Hänger mit einem betätigbaren, aus eine unter der Plane gelegenen Ruhestellung in eine die Plane bereichsweise anhebende Betriebsstellung überführbaren Dachplanenhebe-element.

Bei Dachplanen von Nutzfahrzeugen, Fahrzeugaufbauten, Hänger und dgl. Fahrzeugen besteht die rechtliche Verpflichtung, vor Fahrtantritt die Dachplane von etwaigen Schmutzpartikeln, Schneemassen, Eisanformungen und dgl. zu befreien, damit sich diese nicht während der Fahrt unkontrolliert von der Dachplane lösen und Risiken für nachfolgende Fahrzeuge, Gegenstände oder Mensch und Tier auslösen. Darüber hinaus sehen allerdings Schutzvorschriften für Fahrzeugführer von Nutzfahrzeugen vor, dass diese nicht z.B. per Leiter das Dach besteigen dürfen, um der rechtlichen Verpflichtung vor Fahrantritt genüge zu tun. Stationäre Reinigungsstationen für hochaufbauende Fahrzeuge sind allerdings nicht flächendeckend vorhanden, so dass Bedarf besteht, eine Vorrichtung vorliegen zu haben, mit der Schmutz-, Schneeansammlungs- oder Eisbildung auf den Dachplanen zu verhindern sind. Ein Anheben der Plane von innen her, d.h. vom Frachtraum her, ist zudem nur vor Antritt einer Leerfahrt möglich.

Aus der DE 102 24 291 A1 ist eine Vorrichtung zum bereichsweisen Anheben einer Dachplane der eingangs genannten Art bekannt, die einen aufblasbaren Schlauch aufweist, der sich oberhalb von Querspriegeln eines Fahrzeugaufbaus erstreckt und der es ermöglicht, die Abdeckplane in ihrem Firstbereich aufzublähen, so dass sie eine Neigung zu ihren Seitenaußenbereichen aufweist. Damit ist eine Gefällestrecke zu schaffen, die einer Ansammlung von Verschmutzungen, Schneemassen, Eisbildung entgegenwirkt. Nachteilig hierbei ist, dass ein derart aufzublasener Schlauch einem großen Beschädigungsrisiko unterliegt, so dass es schnell zu Undichtigkeiten des Schlauches kommen kann mit der Folge einer Funktionsuntüchtigkeit. Zudem ist das Befüllen des Schlauches zeitaufwändig und erfordert einen separaten Luftanschluss. Zudem hat das Fahrzeug die Luft zur Verfügung zu stellen, die aber bei längeren Stillstandzeiten bzw. bei häufiger Nutzung von sonstigen Verbrauchern vielfach nicht oder nicht mehr zur Verfügung gestellt werden kann. Beim befüllten Schlauch ist die Dachplane darüber hinaus nicht zu öffnen. Um den Schlauch kontrolliert aufzublasen, ist ein erhöhter Steuerungsaufwand notwendig.

Alternativ ist in der DE 102 24 291 A1 noch vorgesehen, dass anstelle eines Luftschlauches ein Spreizer in Gestalt eines Exzenters, der von einem Spindelmotor verschwenkbar ist, vorgesehen sein kann. Dieser ist aus einer im wesentlichen horizontalen Ruhestellung durch Verschwenken in eine aufrechte Stellung zu bringen, in der er die Plane anhebt. Der konstruktive Aufwand ist jedoch erheblich. Darüber beeinflusst ein derartiger Exzenter mit Spindelmotor in ungünstiger Weise das Gesamtgewicht des Fahrzeuges, des Nutzfahrzeugaufbaus oder eines Hängers. Auch der Bedienungsaufwand ist erheblich, insbesondere wenn eine Lösung geschaffen werden soll, bei der ein Fahrzeugführer zwecks Vermeidung von Schmutzansammlungen, Schneemassenbelastungen oder Eisbildung den Exzenter in aufrechter Position feststellen möchte. Des weiteren ist eine Stromversorung erforderlich, die aber in vielen Anwendungsfällen nicht vorhanden ist. Die Querspriegel sind im Übrigen zu verstärken, was sich auf die Gestehungskosten nachteilig auswirkt. Zudem ist eine Nachrüstung nur mit erheblichem Aufwand möglich, da die Spriegel zu verstärken sind.

Aus der FR 2653478 A1 ist eine Vorrichtung der eingangs genannten Art bekannt. Bei dieser Vorrichtung sind Querspriegel in eine aufrechte Stellung zu überführen, womit allerdings die Dachplane nicht in eine Lage überführt werden kann, in der sie ein Gefälle zu Seitenwandbereichen aufweist. Gleiches gilt auch für die Vorrichtung gemäß der GB 339440 A.

Es ist Aufgabe der vorliegenden Erfindung, eine Vorrichtung zum bereichsweisen Anheben einer Dachplane der eingangs genannten Art zur Verfügung zu stellen, bei der mit einfachen konstruktiven Mitteln die Dachplane in eine Lage zu überführen ist, bei der sie ein Gefälle zu Seitenrandbereichen aufweist und die sich in einfacher Weise in dieser Lage feststellen und auch wieder absenken lässt.

Zur Lösung dieser Aufgabe zeichnet sich die Vorrichtung durch die im Anspruch 1 angegebenen Merkmale aus.

Damit ist eine Vorrichtung zur Verfügung gestellt, bei der sich ein relativ flachbauendes Faltelement in seiner Ruhestellung unterhalb der Dachplane befindet, und über das Zugelement in eine formveränderte Lage zu überführen ist, bei der sich aufgrund der Faltung dieses Elementes die Dachplane anhebt. Unter einem Faltelement wird hierbei jedwedes Element verstanden, das eine Falt- bzw. Gelenkstelle aufweist, bezüglich der sich Teile des Faltelementes in unterschiedliche Lagepositionen bringen lassen derart, dass das Faltelement seinerseits eine Bewegung in vertikaler Richtung ausübt zwecks Anheben der Dachplane. Das Faltelement kann daher elastisch ausgebildet sein mit einem mittleren gerundeten Bereich, es kann auch Schenkel oder Bügel mit einer Gelenk- oder Faltstelle haben und/oder auch als Element aus einem Kunststoffmaterial ausgebildet sein, dass derart flexibel ist, dass sich zwei oder mehr benachbarte Bereiche aufeinander oder voneinander weg zu bewegen lassen. Weiterhin ist außerordentlich vorteilhaft bei der erfindungsgemäßen Lösung, dass sich die Dachplane in Ruhestellung aber auch in der Betriebsstellung des Faltelements öffnen und schließen lässt. Die Querspriegel brauchen nicht verstärkt werden, so dass die Vorrichtung einfach nachrüstbar ist. Weiterhin ist vorteilhaft, dass sich die Vorrichtung manuell betätigen lässt und in dieser manuellen Ausführung stromversorgungsfrei und sich auch ohne sonstige Versorgungsquellen wie Druckluftanschlüsse und dgl. betreiben lässt.

Bevorzugterweise ist das Faltelement einenends an einem Querspriegel eines Fahrzeugaufbaus befestigt, z.B. durch eine Schraubverbindung, wobei ein anderes Ende des Faltelements über einen Mitnehmer an dem Zugelement, beispielsweise einem Gurt, festgelegt ist. Durch Ziehen des Gurtes ist das Faltelement dann aus der Ruhestellung in die aufgestellte Betriebsstellung zu bringen. Durch einfaches Feststellen des Gurtes kann das Faltelement in dieser Stellung verbleiben, so dass die Plane in der aufgestellten Stellung verbleibt mit der entsprechenden Schräglage zu ihren Außenseitenbereichen. Damit ist wirksam dem vorgebeugt, dass sich Wassermassen, Schneemassen oder sonstige Schmutzpartikel auf dem Dach ablagern und sich bei einer späteren Fahrt unkontrolliert von der Dachplane lösen.

Die Faltelemente können einfach herzustellende Kunststoffartikel sein. Das Zugelement kann als handelsüblicher Verzurrgut ausgebildet sein und beispielsweise gegen die Kraft einer Zugfeder gezogen werden. Der Ziehvorgang kann durch einen einfachen Zylinder ausgelöst werden. Beispielsweise kann aber auch ein Schwenkhebel an einer Vorder- oder Hinterwand des Fahrzeugaufbaus vorgesehen sein, der sich in der Endposition verriegeln lässt, so dass das Faltelement in der die Dachplane anhebenden gefalteten bzw. verschwenkten Betriebsstellung verbleibt. Durch einfaches Lösen einer Betätigungseinrichtung kann der Verzurrgut durch Federkraft in die Ruhestellung gebracht werden, so dass in vorteilhafter Weise in der einfachsten Ausführung auf Energie beanspruchende Verstellmechanismen sogar ganz verzichtet werden kann. Darüber ist es jedoch selbstverständlich auch möglich, beispielsweise motorische, hydraulische oder pneumatische Betätigungselemente vorzusehen, z.B. auch verbunden mit einer Steuereinrichtung, so dass die Bedienperson zentral durch einen einzigen Auslösevorgang, beispielsweise per Knopfdruck, den Anhebevorgang auslösen und wieder zurückstellen kann. Des Weiteren sind auch mit Sensore ausgerüstete Programmsteuerungen einsetzbar.

Bevorzugterweise sind an einem Zugelement, beispielsweise dem Verzurrgurt, mehrere Faltelemente mit entsprechenden Mitnehmern vorgesehen, die sich jeweils an Querspriegeln des Nutzfahrzeuges, des Fahrzeugaufbaus oder des Hängers abstützen.

Somit sind an verschiedenen Stellen, jeweils mit dem entsprechenden Abstandsmaß der Querspriegel, die Faltelemente vorgesehen, die sich nur mittels einer Betätigungseinrichtung und mittels eines Gurtes aus ihrer Ruhestellung in ihre aufgestellte Betriebsstellung überführen lassen. Das Zugelement erstreckt sich dabei bevorzugt in Längsrichtung des Nutzfahrzeuges, des Fahrzeugaufbaus oder des Hängers und zwar oberhalb von entsprechenden Querspriegeln. Alternativ zu den Querspriegeln können aber auch sonstige Abstützvorrichtungen für die Faltelemente vorgesehen sein.

Zur weiteren Erläuterung der Erfindung wird auf weitere Unteransprüche, die nachfolgende Beschreibung und die Zeichnung verwiesen.

In der Zeichnung zeigen:
- Fig. 1: eine Prinzipdarstellung eines Ausführungsbeispiels einer Vorrichtung zum bereichsweisen Anheben einer Dachplane;
- Fig. 2: in perspektivischer Darstellung ein Ausführungsbeispiel einer Vorrichtung zum bereichsweisen Anheben einer Dachplane bei einem Nutzfahrzeugaufbau mit vergrößerter Einzeldarstellung A in der Ruhestellung der Faltelemente;
- Fig. 3: das Ausführungsbeispiel nach Fig. 2 in der Betriebsstellung der Faltelemente;

In der Zeichnung sind übereinstimmende Teile mit übereinstimmenden Bezugsziffern versehen.

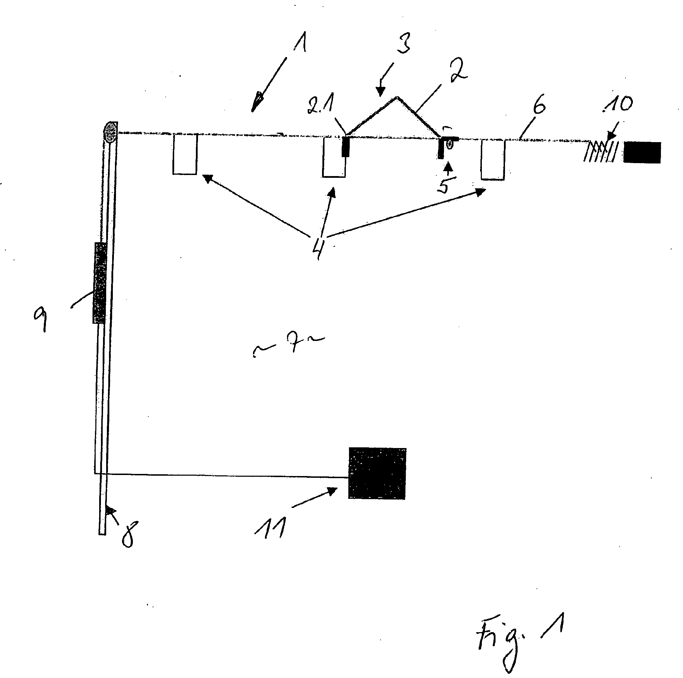

In der in Fig. 1 dargestellten Prinzipdarstellung eines Ausführungsbeispiels einer Vorrichtung zum Anheben einer Dachplane ist diese allgemein mit 1 beziffert, wobei mit 2 das Dachhebeelement in Gestalt eines Faltelementes beziffert ist, das in der Prinzipdarstellung nach Fig. 1 in der aufgefalteten bzw. aufgeklappten Betriebsstellung dargestellt ist und in Pfeilrichtung 3 wieder in eine waagerechte Ruhestellung überführt werden kann. Oberhalb des Faltelementes 2 soll sich die entsprechende nicht dargestellte Dachplane befinden.

Mit 4 sind Querspriegeln eines Fahrzeugaufbaus 12 beziffert. Das Faltelement 2 ist über eine Mitnehmereinrichtung 5 an einem Zugelement 6 befestigt und mit dem Ende 2.1 an dem Querspriegel befestigt. Das Zugelement 6 ist bei dem gezeigten Fahrzeugaufbau in einen Bereich außerhalb des Fahrzeugaufbaus 7 geführt, beispielsweise an eine Stirnwand 8 des Fahrzeugaufbaus 12und kann über einen Zylinder 9, beispielsweise einen pneumatischen Zylinder, gezogen werden. Wird das Zugelement 6 gezogen, wird es in die in der Fig. 1 dargestellte aufgefaltete bzw. aufgeklappte Position überführt, da es sich mit dem Ende 2.1 an dem Querspriegel 4 abstützt. Anstelle eines Feststellzylinders oder Pneumatikzylinders kann dieses auch durch einen einfachen mechanischen Hebel erfolgen, der in einer z.B. abgeklappten Position sich feststellen bzw. verriegeln lässt. Das Ziehen des Zugelementes 6 erfolgt gegen die Kraft einer Zugfeder 10, so dass nach Lösen des Feststellzylinders 9 die Vorrichtung 6 wieder in ihre Ausgangsposition gezogen wird, wonach die Faltelemente ein die waagerechte Position überführt werden, wonach die Dachplane wieder in ihre nach unten bewegte Position gelangen kann. Mit 11 ist noch ein Druckluftvorrat gezeigt für einen pneumatischen Feststellzylinder. Es ist auch möglich, als Zugelement ein über Rollen geführtes Endlosband einzusetzen, das eine Relativbewegung der beiden Enden der Faltelemente bewirken kann zum Anheben der Dachplane.

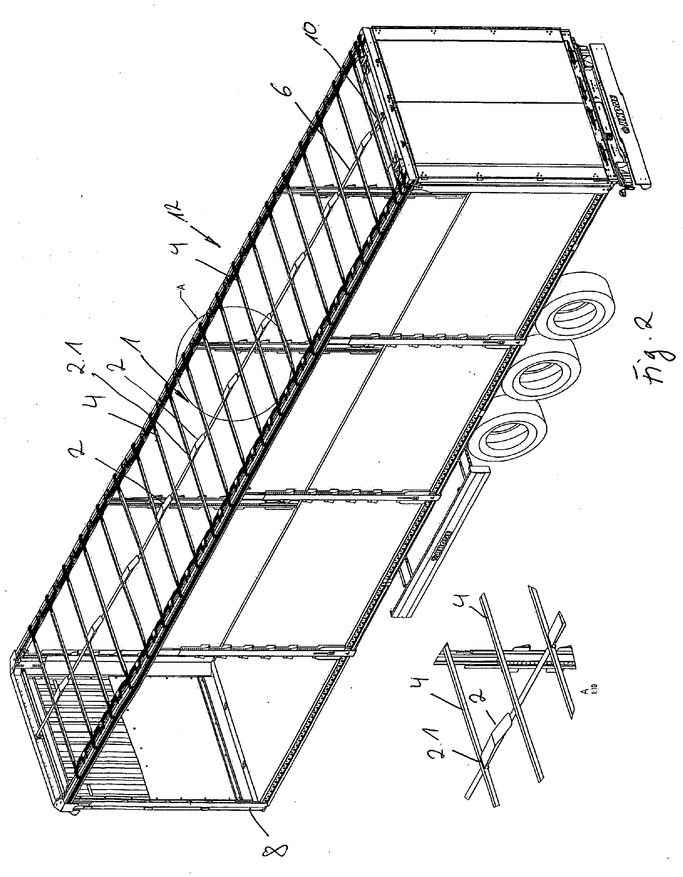

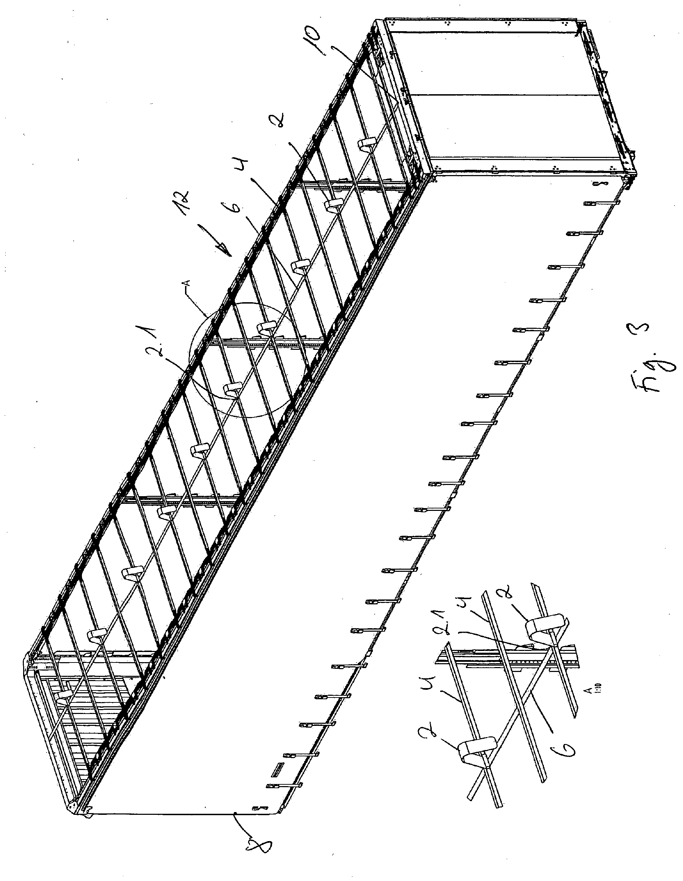

In den Fig. 2 und 3 ist die Vorrichtung dargestellt für ein Fahrzeugaufbau 12. Hier sind wiederum die Teile gemäß Fig. 1 mit übereinstimmenden Bezugsziffern versehen. In Fig. 2 ist das Faltelement 2 in der abgeklappten Ruhestellung gezeigt und in Fig. 3 in der aufgeklappten Position, in der es die im einzelnen nicht näher dargestellte Plane anhebt. Ersichtlich erstreckt sich das Zugelement 6 in Gestalt eines Zurrgurtes 6 in Längsrichtung des Fahrzeugaufbaus 12, so dass mit Abstand zueinander in Längsrichtung des Fahrzeuges mehrere Faltelemente 2 vorgesehen sind, die sich jeweils an Querspriegeln 4 abstützen. Diese sind durch eine gemeinsame Betätigung des Zurrgurtes 6 zu betätigen. Der Zurrgurt 6 erstreckt sich über den Querspriegeln 4. Ersichtlich ist es möglich, durch ein einfaches Betätigen alle Faltelemente 2 in die aufgestellte Position zu bringen, so dass die Bedienperson eines Fahrzeuges z.B. nach Beendigung einer Fahrt nur eine zentrale Betätigungseinrichtung 9 auslösen muss, beispielsweise manuell oder durch einen zentralen Auslöseknopf, wonach die Plane in die aufgestellte Position gebracht werden kann und bei etwaigen Schneefall oder Regen mit anschließendem Frost Schnee oder Wasser von der Plane ablaufen kann, so dass es nicht mehr zu einer Eisbildung auf der Plane kommt.

Insgesamt ist damit eine Vorrichtung zur Verfügung gestellt, die außerordentlich einfach baut, kostengünstig herstellbar ist und darüber hinaus auch noch als Nachrüstsatz zur Verfügung gestellt werden kann.

## Patentansprüche

1. Vorrichtung zum bereichsweisen Anheben einer Dachplane für beispielsweise Nutzfahrzeuge, Fahrzeugaufbauten (12) und Hänger mit einem betätigbaren, aus einer unter der Plane gelegenen Ruhestellung in eine die Plane bereichsweise anhebende Betriebsstellung überführbaren Dachplanenhebeelement, wobei das Dachplanenhebeelement als Faltelement (2) ausgebildet ist und einenends (2.1) an einem ortsfesten Teil (4) des Nutzfahrzeuges, des Fahrzeugaufbaus (12) oder des Hängers oder einem bewegbaren Stützelement gestützt und anderenends mit einem relativ zu dem ortsfesten Teil (4) oder dem Stützelement bewegbaren Zugelement (6) verbunden sind. über dass das Faltelement (2) in die die Dachplane anhebende gefaltete Betriebsstellung überführbar ist, **dadurch gekennzeichnet, dass** das Zugelement (6) sich in Längsrichtung des Nutzfahrzeuges, des Fahrzeugaufbaus (12) oder des Hängers erstreckt und mit dem Zugelement (6) mehrere mit Abstand voneinander angeordnete Faltelemente (2) verbunden sind.

2. Vorrichtung nach Anspruch 1, **dadurch gekennzeichnet, dass** die Faltelemente (2) einenends (2.1) an Querspriegeln (4) des Nutzfahrzeuges, des Fahrzeugaufbaus (12) oder des Hängers befestigt sind.

3. Vorrichtung nach einem der Ansprüche 1 oder 2, **dadurch gekennzeichnet, dass** das Zugelement (6) oberhalb von Querspriegeln (4) des Nutzfahrzeuges, des Fahrzeugaufbaus (12) oder des Hängers vorgesehen ist.

4. Vorrichtung nach einem der Ansprüche 1 bis 3, **dadurch gekennzeichnet, dass** das Zugelement (6) mit einer zentralen Betätigungsvorrichtung (9) verbunden ist.

5. Vorrichtung nach Anspruch 4, **dadurch gekennzeichnet, dass** über die Betätigungsvorrichtung (9) das Zugelement (2) mechanisch bewegbar und in einer gezogenen Betriebsendstellung feststellbar ist.

6. Vorrichtung nach Anspruch 5, **dadurch gekennzeichnet, dass** die Betätigungsvorrichtung (9) über eine Steuerung zum Anheben und zum Absenken der Dachplane betätigbar ist.

7. Vorrichtung nach Anspruch 6, **dadurch gekennzeichnet, dass** die Betätigungsvorrichtung (9) einen motorischen Antrieb aufweist.

8. Vorrichtung nach Anspruch 7, **dadurch gekennzeichnet, dass** die Betätigungsvorrichtung (9) ein pneumatisches Stellmittel aufweist, das mit dem Zugelement (6) verbunden ist.

9. Vorrichtung nach einem der Ansprüche 4 bis 8, **dadurch gekennzeichnet, dass** die Betätigungsvorrichtung (9) in einem Außenbereich des Nutzfahrzeuges, des Aufbaus (12) oder des Hängers angeordnet ist.

10. Vorrichtung nach einem der Ansprüche 1 bis 10, **dadurch gekennzeichnet, dass** das Zugelement (6) einenends von einem Kraftspeicher (10) beaufschlagt ist.

11. Vorrichtung nach Anspruch 10, **dadurch gekennzeichnet, dass** der Kraftspeicher (10) als Feder ausgebildet ist.

## Claims

1. Device for raising regions of a roof tarpaulin for, for example, commercial vehicles, vehicle superstructures (12) and trailers, said device having an actuatable roof tarpaulin raising element that can be transferred from a starting position, located under the tarpaulin, into an operating position, which raises the tarpaulin in regions, the roof tarpaulin element being in the form of a folding element (2) and being supported at one end (2.1) on a stationary part (4) of the commercial vehicle, the vehicle superstructure (12) or the trailer, or being supported on a movable support element, and being connected at the other end to a traction element (6) that is movable relative to the stationary part (4) or the support element, by means of which traction element the folding element (2) can be transferred into the folded operating position that raises the roof tarpaulin, **characterised in that** the traction element (6) extends in the longitudinal direction of the commercial vehicle, the vehicle superstructure (12) or the trailer, and a plurality of folding elements (2), arranged at a distance from one another, are connected to the traction element (6).

2. Device according to claim 1, **characterised in that** the folding elements (2) are fastened at one end (2.1) to transverse hoops (4) of the commercial vehicle, the vehicle superstructure (12) or the trailer.

3. Device according to either claim 1 or claim 2, **characterised in that** the traction element (6) is provided above transverse hoops (4) of the commercial vehicle, the vehicle superstructure (12) or the trailer.

4. Device according to any of claims 1 to 3, **characterised in that** the traction element (6) is connected to a central actuating device (9).

5. Device according to claim 4, **characterised in that** the traction element (2) can be mechanically moved by the actuating device (9) and can be fixed in a pulled final operating position.

6. Device according to claim 5, **characterised in that** the actuating device (9) can be actuated by means of a controller in order to raise and lower the roof tarpaulin.

7. Device according to claim 6, **characterised in that** the actuating device (9) comprises a motor drive.

8. Device according to claim 7, **characterised in that** the actuating device (9) comprises a pneumatic adjusting means that is connected to the traction element (6).

9. Device according to any of claims 4 to 8, **characterised in that** the actuating device (9) is arranged in an external region of the commercial vehicle, the structure (12) or the trailer.

10. Device according to any of claims 1 to 10, **characterised in that** an energy accumulator (10) acts on one end of the traction element (6).

11. Device according to claim 10, **characterised in that** the energy accumulator (10) is in the form of a spring.

## Revendications

1. Dispositif servant à soulever localement une bâche de toit destinée par exemple à des véhicules utilitaires, des carrosseries de véhicules (12) et des remorques, le dispositif comprenant un élément de levage de bâche de toit actionnable qui peut être transféré d'une position de repos, située sous la bâche, dans une position de fonctionnement soulevant localement la bâche, l'élément de levage de bâche de toit étant conçu sous la forme d'un élément pliant (2) et venant en appui à une extrémité (2.1) sur un élément fixe (4) du véhicule utilitaire, de la carrosserie de véhicule (12) ou de la remorque ou sur un élément d'appui mobile et étant relié à l'autre extrémité à un élément de traction (6) mobile par rapport à l'élément fixe (4) ou à l'élément d'appui, ce qui permet de transférer l'élément pliant (2) dans la position de fonctionnement pliée de soulèvement de la bâche de toit, **caractérisé en ce que** l'élément de traction (6) s'étend dans la direction longitudinale du véhicule utilitaire, de la carrosserie de véhicule (12) ou de la remorque et **en ce qu'**une pluralité d'éléments pliants (2) espacés les uns des autres sont reliés à l'élément de traction (6).

2. Dispositif selon la revendication 1, **caractérisé en ce que** les éléments pliants (2) sont fixés à une extrémité (2.1) à des traverses (4) du véhicule utilitaire, de la carrosserie de véhicule (12) ou de la remorque.

3. Dispositif selon l'une des revendications 1 ou 2, **caractérisé en ce que** l'élément de traction (6) est prévu au-dessus des traverses (4) du véhicule utilitaire, de la carrosserie de véhicule (12) ou de la remorque.

4. Dispositif selon l'une des revendications 1 à 3, **caractérisé en ce que** l'élément de traction (6) est relié à un dispositif d'actionnement central (9).

5. Dispositif selon la revendication 4, **caractérisé en ce que** l'élément de traction (2) peut être déplacé mécaniquement par le biais du dispositif d'actionnement (9) et peut être immobilisé dans une position de fonctionnement tendu.

6. Dispositif selon la revendication 5, **caractérisé en ce que** le dispositif d'actionnement (9) peut être actionné par le biais d'une commande pour soulever et abaisser la bâche de toit.

7. Dispositif selon la revendication 6, **caractérisé en ce que** le dispositif d'actionnement (9) comporte un entraînement par moteur.

8. Dispositif selon la revendication 7, **caractérisé en ce que** le dispositif d'actionnement (9) comporte un moyen de réglage pneumatique qui est relié à l'élément de traction (6) .

9. Dispositif selon l'une des revendications 4 à 8, **caractérisé en ce que** le dispositif d'actionnement (9) est disposé dans une zone extérieure du véhicule utilitaire, de la carrosserie (12) ou de la remorque.

10. Dispositif selon l'une des revendications 1 à 10, **caractérisé en ce que** l'élément de traction (6) est sollicité à une extrémité par un accumulateur de force (10).

11. Dispositif selon la revendication 10, **caractérisé en ce que** l'accumulateur de force (10) est conçu sous la forme d'un ressort.
